# DEMANDE DE BREVET EUROPEEN

(11) **EP 1 646 132 A2**
(43) Date de publication de la demande: **12.04.2006**
(21) Numéro de dépôt: 05109269.0
(22) Date de dépôt: 06.10.2005
(51) Int. Cl.: H02M 1/10, H02M 7/06

(54) **Circuit d'alimentation double**

(30) Priorité: 08.10.2004 FR 0452321
(71) Demandeur: ST MICROELECTRONICS S.A., 92120 Montrouge (FR)
(72) Inventeur: ACHART, Raynald, 37230, PERNAY (FR)
(74) Mandataire: de Beaumont, Michel

(57) **Abrégé**

L'invention concerne un circuit destiné à fournir deux tensions continues de polarités inversées, comprenant : deux condensateurs (C1, C2) dont les électrodes respectives sont reliées à deux bornes destinées à recevoir une tension alternative (2, 3) et dont les deuxièmes électrodes respectives sont connectées l'une à l'autre par deux premières diodes (D1, D2) en anti-série ; une source de courant commandable (M) dont une première borne est reliée aux anodes communes (A) desdites première diodes ; deux deuxièmes diodes (D7, D8) connectées en anti-série entre lesdites bornes destinées à recevoir ladite tension alternative et dont les cathodes communes (10) sont reliées à une deuxième borne de ladite source de courant commandable ; un circuit (9) de commande de ladite source de courant ; et deux troisièmes diodes (D10, D9) connectées en anti-série entre lesdites bornes destinées à recevoir ladite tension alternative, ledit circuit de commande prélevant son alimentation entre les cathodes communes des deuxièmes diodes et les anodes communes (11) des troisièmes.

## Description

### Domaine de l'invention

La présente invention concerne le domaine des circuits d'alimentation double à partir d'une tension alternative. Un exemple d'application de l'invention est la génération de tensions d'alimentation de blocs de commande d'un variateur de puissance destiné à être connecté en série avec une charge à alimenter par une tension alternative (généralement la tension secteur), et basé sur deux interrupteurs bidirectionnels en tension et unidirectionnels en courant qui sont connectés en anti-parallèle.

### Exposé de l'art antérieur

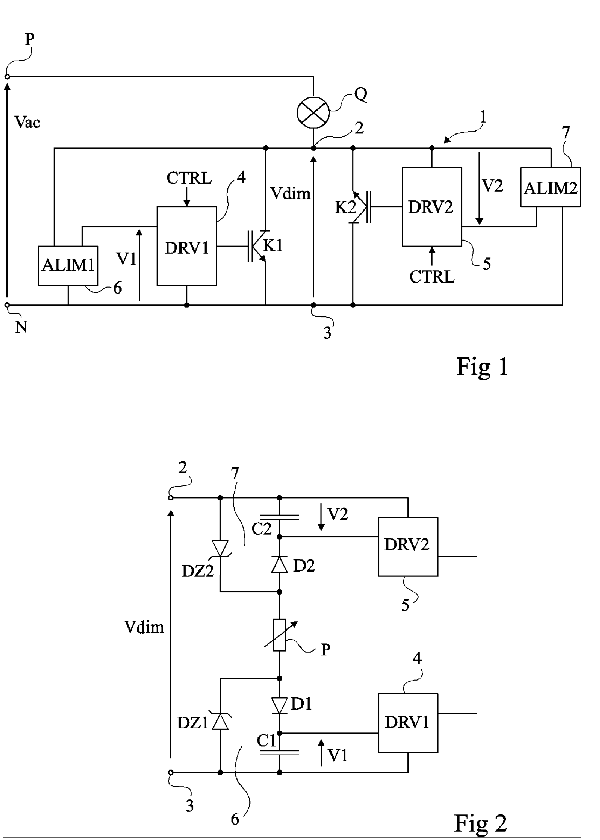

La figure 1 représente schématiquement un exemple classique de circuit 1 de commande en variation de puissance d'une charge Q alimentée par une tension alternative Vac. Deux interrupteurs K1 et K2, constitués, par exemple, de transistors IGBT à tenue de tension inverse, sont connectés en anti-parallèle entre deux bornes 2 et 3 du variateur de puissance. Le variateur est connecté en série avec la charge Q entre deux bornes P et N d'application de la tension Vac. Chaque transistor K1 ou K2 a sa grille connectée en sortie d'un circuit 4 (DRV1), respectivement 5 (DRV2), générant un signal de commande approprié basé sur une consigne de puissance. La commande en variation de puissance s'effectue en angle de phase et consiste à commander l'instant de fermeture (ou d'ouverture) des transistors K1 et K2 selon l'alternance considérée de la tension alternative. Le réglage de la puissance est effectué par les circuits 4 et 5 qui, par exemple, reçoivent un signal CTRL de consigne. Dans l'exemple de la figure 1, les tensions d'alimentation V1 et V2 sont respectivement fournies par des circuits 6 (ALIM1) et 7 (ALIM2) extrayant une tension continue V1, respectivement V2, de la tension entre les bornes 2 et 3, respectivement 3 et 2.

D'autres interrupteurs de puissance K1 et K2 peuvent être utilisés. Par exemple, il peut s'agir de transistors MOS ou IGBT chacun en série avec une diode, ou de thyristors.

Un problème récurrent de ce genre de circuit est de fournir des tensions d'alimentation V1 et V2 aux circuits de commande 4 et 5 ainsi qu'une référence de commande commune, bien que les circuits 4 et 5 ne soient pas référencés au même potentiel (potentiel du point 3 pour le circuit 4 et potentiel du point 2 pour le circuit 5).

La figure 2 représente un exemple classique de montage de fourniture des tensions d'alimentation V1 et V2 en même temps qu'une commande commune pour les deux circuits 4 et 5. Pour simplifier, les transistors K1 et K2 et la charge n'ont pas été représentés en figure 2.

Chaque circuit d'alimentation 6, 7 est constitué d'un condensateur C1, respectivement C2, aux bornes duquel est prélevée la tension V1, respectivement V2. Ce condensateur C1 ou C2 est en série avec une diode D1, respectivement D2, et cette association en série est connectée en parallèle avec une diode Zener DZ1, respectivement DZ2, fixant la valeur de la tension V1, respectivement V2. Les deux montages 6 et 7 sont, dans cet exemple, reliés l'un à l'autre par un potentiomètre P destiné à fixer la consigne de puissance souhaitée pour la charge. La variation de puissance s'effectue alors en réglant l'instant de fourniture de la tension d'alimentation correspondante aux circuits 4 et 5 par rapport aux passages par zéro de la tension Vac. Lors des alternances positives (tension Vac positive entre les bornes P et N, figure 1), la tension Vdim aux bornes 2 et 3 du variateur de puissance est également positive. Un courant circule alors dans la diode DZ2 polarisée en direct, à travers le potentiomètre P, puis dans la diode D1 polarisée en direct pour charger le condensateur C1. La valeur du potentiomètre P conditionne la vitesse de charge du condensateur C1. La diode DZ1 fixe, par sa tension seuil, la tension V1. Pendant les alternances négatives, un courant circule dans la diode DZ1 puis dans le potentiomètre P puis dans la diode D2 pour charger le condensateur C2. La valeur du potentiomètre P conditionne la vitesse de charge du condensateur C2. La diode DZ2 fixe, par sa tension au seuil, la tension V2.

Des montages tels que ceux des figures 1 et 2 sont décrits, par exemple, dans la demande de brevet européen N° 1 416 620 de la demanderesse.

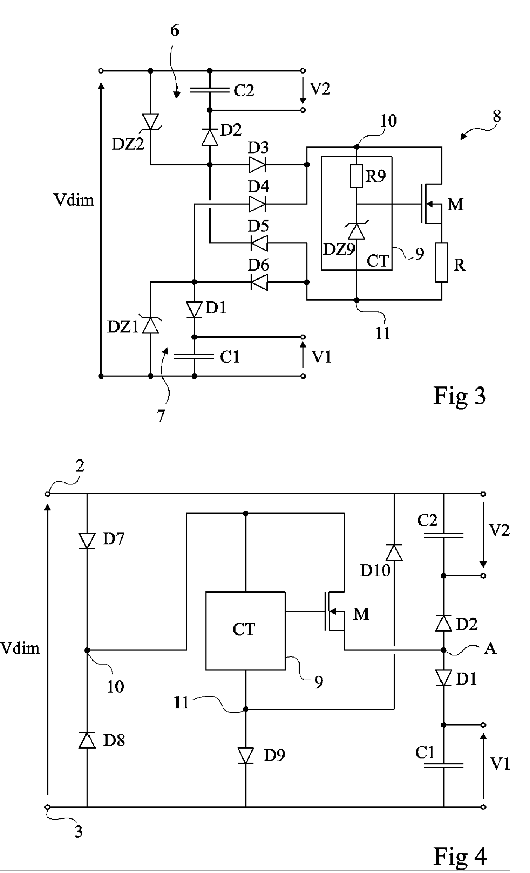

La figure 3 représente un autre exemple classique de montage de fourniture de tensions d'alimentation V1 et V2 continue de polarités opposées à partir d'une tension alternative. Appliqué à un variateur de puissance, le montage de la figure 3 fournit les tensions V1 et V2 aux circuits 4 et 5 de la figure 1. Partant du montage de la figure 2, le potentiomètre P est remplacé par un circuit de commande 8 actif. Ce circuit 8 est constitué d'un transistor MOS M constituant une source de courant variable, commandable linéairement par un circuit électronique 9 (CT), et intercalé entre les deux circuits 6 et 7 de fourniture des tensions d'alimentation V1 et V2. Pour permettre un fonctionnement au moyen d'un seul transistor MOS, quatre diodes D3, D4, D5 et D6 sont montées en pont double alternance entre les anodes respectives des diodes D1 et D2 (ou les cathodes respectives des diodes Zener DZ1 et DZ2). Par exemple, l'anode de la diode D3 et la cathode de la diode D5 sont reliées à l'anode de la diode D2 tandis que l'anode de la diode D4 et la cathode de la diode D6 sont reliées à l'anode de la diode D1. Les cathodes des diodes D3 et D4 et les anodes des diodes D5 et D6 sont respectivement reliées à des bornes 10 et 11 d'alimentation du circuit 9. Le transistor MOS M constituant la source de courant variable est, en pratique, en série avec une résistance R entre les bornes 10 et 11. Le circuit 9 comprend typiquement une résistance R9 entre le drain et la grille du transistor M et une diode Zener DZ9 entre la grille du transistor M et la borne 11.

Un circuit d'alimentation actif tel que décrit en relation avec la figure 3 permet de réduire les pertes lorsque la charge est en veille et n'a pas besoin d'être alimentée dans la mesure où le circuit 9 peut alors commander l'ouverture du transistor M. Toutefois, cela nécessite de modifier le circuit 9 pour qu'il exploite une information sur les tensions V1 et V2. Or, la fourniture d'une telle information pose un problème de référence, le circuit 9 ne possédant pas de référence commune avec les tensions V1 et V2. On pourrait penser utiliser deux opto-coupleurs pour transmettre ces informations au circuit 9. Un inconvénient évident est toutefois le coût et l'encombrement.

### Résumé de l'invention

La présente invention vise à proposer un circuit d'alimentation double et à commande active, par exemple, pour un variateur de puissance.

L'invention vise notamment à éviter le recours à des opto-coupleurs pour transmettre une information de détection de tension au circuit de commande actif.

L'invention vise également à proposer une solution compatible avec l'utilisation d'un seul circuit de commande actif.

L'invention vise également à proposer une solution adaptée à la réalisation d'un variateur de puissance à base de transistors IGBT.

Pour atteindre ces objets ainsi que d'autres, la présente invention prévoit un circuit destiné à fournir deux tensions continues de polarités inversées à partir d'une tension alternative, comprenant :
deux condensateurs dont les électrodes respectives sont reliées à deux bornes destinées à recevoir ladite tension alternative et dont les deuxièmes électrodes respectives sont connectées l'une à l'autre par deux premières diodes en anti-série ;
une source de courant commandable dont une première borne est reliée aux anodes communes de l'association en série desdites premières diodes ;
deux deuxièmes diodes connectées en anti-série entre lesdites bornes destinées à recevoir ladite tension alternative et dont les cathodes communes sont reliées à une deuxième borne de ladite source de courant commandable ;
un circuit de commande de ladite source de courant ; et
deux troisièmes diodes connectées en anti-série entre lesdites bornes destinées à recevoir ladite tension alternative, ledit circuit de commande prélevant son alimentation entre les cathodes communes des deuxièmes diodes et les anodes communes des troisièmes.

Selon un mode de réalisation de la présente invention, la source de courant est constituée d'un transistor MOS.

La présente invention prévoit également un circuit de commande en variation de puissance de deux interrupteurs bidirectionnels en tension et unidirectionnels en courant montés en anti-parallèle, en série avec une charge alternative, comprenant deux étages de commande identiques respectivement dédiés à chaque interrupteur, chaque étage de commande recevant une tension de polarité inversée par rapport à l'autre.

Selon un mode de réalisation de la présente invention, lesdits interrupteurs sont des transistors IGBT.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1, 2 et 3 qui ont été décrites précédemment sont destinées à exposer l'état de la technique et le problème posé ;
la figure 4 représente, de façon très schématique et sous forme de blocs, un mode de réalisation d'un circuit d'alimentation double selon la présente invention ; et
la figure 5 est un schéma électrique détaillé du circuit d'alimentation de la figure 4.

Les mêmes éléments ont été désignés par les mêmes références aux différentes figures. Par souci de clarté, seuls les éléments qui sont nécessaires à la compréhension de l'invention ont été représentés aux figures et seront décrits par la suite. En particulier, les détails constitutifs des circuits de commande (DRV1 et DRV2, figure 1) des transistors de puissance n'ont pas été exposés, l'invention étant compatible avec tout circuit de commande classique et notamment ceux prévus dans la demande européenne N° 1 416 620 susmentionnée.

L'invention sera décrite par la suite en relation avec une application à un variateur de puissance. Elle s'applique cependant plus généralement à toute fourniture de deux tensions continues de polarités opposées à partir d'une tension alternative.

La figure 4 représente, de façon très schématique et sous forme de blocs, un circuit d'alimentation double à masse commutée selon un mode de réalisation de l'invention. Ce circuit est, par exemple, destiné à être inséré dans un montage de variateur de puissance du type de ceux représentés en figures 1 et 2 pour fournir des tensions V1 et V2 à des étages (4 et 5, figure 1 ou 2) de commande de transistors de puissance de type IGBT ou autres.

Comme précédemment, les tensions V1 et V2 respectives sont fournies par des condensateurs C1 et C2, la référence de la tension V1 correspondant à une borne 3 tandis que la référence de la tension V2 correspond à une borne 2 du variateur de puissance. Les autres électrodes des condensateurs C1 et C2 sont connectées l'une à l'autre par deux diodes D1 et D2 connectées en anti-série. Les anodes communes des diodes D1 et D2 sont, dans ce mode de réalisation, reliées à la source d'un transistor M (par exemple, de type MOS) commandé par un circuit actif 9. Selon un premier mode de réalisation, le circuit 9 (CT) est du type de celui décrit en relation avec la figure 3. Le drain du transistor est relié aux cathodes communes de deux diodes D7 et D8 dont les anodes respectives sont reliées directement aux bornes 2 et 3. Le circuit 9 a une première borne (borne de la résistance R9 opposée à la diode Zener DZ9 non représenté en figure 4) reliée aux cathodes communes 10 des diodes D7 et D8, son autre borne 11 (anode de la diode DZ9) étant connectée par l'intermédiaire de diodes, respectivement D9 et D10, aux bornes 3 et 2.

Pendant les alternances positives (dans l'orientation prise aux figures pour la tension Vdim entre les bornes 2 et 3), un courant circule à travers la diode D7, puis à travers le transistor M pour charger le condensateur C1 par l'intermédiaire de la diode D1. La tension aux bornes du circuit 9 est positive entre les bornes 10 et 11.

Pendant les alternances négatives, un courant circule à travers la diode D8, puis à travers le transistor M pour charger le condensateur C2 à travers la diode D2. La tension d'alimentation du circuit 9 reste positive entre les bornes 10 et 11.

Fonctionnellement, cela revient à commuter la masse du circuit de fourniture des tensions d'alimentation continues et à aiguiller le courant du transistor commun aux deux alimentations.

Un avantage est que le nombre de diodes en série entre les bornes 2 et 3 pour la génération des tensions d'alimentation est limité à deux (D7 et D9, ou D8 et D10) alors qu'il est de quatre (DZ2, D3, D6 et D1, ou DZ1, D4, D5 et D2) dans le montage classique de la figure 3. Cela limite la chute de tension.

Les vitesses de charge respectives des condensateurs C1 et C2 sont conditionnées par la commande que reçoit le transistor M, donc par la tension aux bornes 2 et 3.

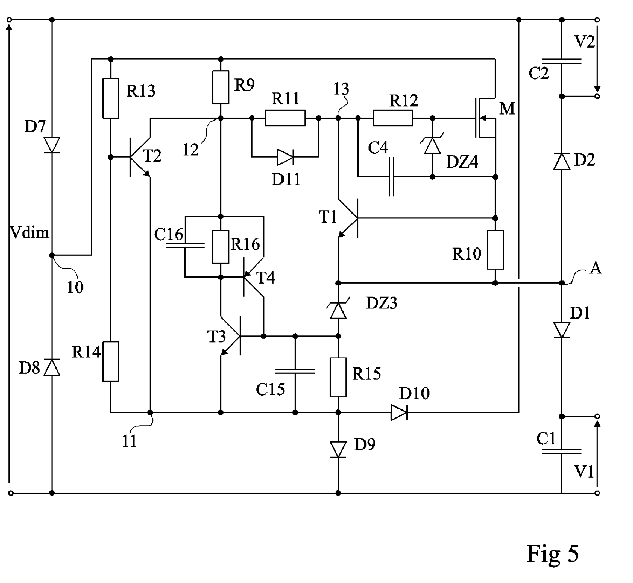

La figure 5 représente un schéma électrique détaillé d'un autre mode de réalisation du circuit 9 dans l'environnement de la figure 4. Une résistance R10 est intercalée entre la source du transistor M et les anodes communes A des diodes D1 et D2. Cette résistance sert à polariser un transistor bipolaire de type NPN T1 dont la base est reliée au point milieu entre le transistor M et la résistance R10. L'émetteur du transistor T1 est connecté au point A et son collecteur est connecté au point milieu 13 de deux résistances R11 et R12 en série entre la grille du transistor M et un point 12, connecté par la résistance R9, au point 10. Le transistor T1 et la résistance R10 servent à limiter le courant dans le transistor M. La résistance R11 est en parallèle avec une diode D11, et la résistance R12 est en parallèle avec un montage série d'un condensateur C4 et d'une diode Zener DZ4, la cathode de la diode DZ4 étant connectée à la grille du transistor M. Le point milieu de l'association en série (anode de la diode Zener DZ4) est en outre relié à la source du transistor M. La diode DZ4 sert de protection de la grille du transistor M. La résistance R11 sert à régler la vitesse de décharge de la grille du transistor M différemment de la vitesse de sa charge.

L'émetteur du transistor T1 est par ailleurs relié, par une diode Zener DZ3 en série avec une résistance R15 à la borne 11, la résistance R15 étant en parallèle avec un condensateur C15 formant une cellule RC. La diode DZ3, la résistance R15 et le condensateur C15 servent à régler les niveaux des tensions V1 et V2.

Un deuxième transistor bipolaire de type NPN T2 relie les points 12 et 11, la base de ce transistor étant reliée au point milieu d'une association en série de deux résistances R13 et R14 constituant un pont diviseur résistif entre les bornes 10 et 11. Les résistances R13, R14 et le transistor T2 servent à autoriser la charge des condensateurs C1 et C2 quand la tension Vdim est inférieure au seuil fixé par le pont diviseur résistif R13, R14 pour atteindre la tension base-émetteur de saturation du transistor T2.

Le point 12 est relié, par une résistance R16 en série avec un transistor bipolaire de type NPN T3, à la borne 11, la résistance R16 étant en parallèle avec un condensateur C16. La base du transistor T3 est reliée directement à l'anode de la diode DZ3 et, par un transistor T4 de type PNP dont la base est connectée au collecteur du transistor T3, à la borne 10. Le condensateur C16, la résistance R16 et les transistors T3 et T4 assurent une fonction de thyristor qui décharge la grille du transistor M quand les condensateurs C1 et C2 ont atteint les niveaux de charge souhaités.

La variation de puissance est effectuée par des circuits classiques (4 et 5, figures 1 et 2), le circuit de l'invention fournissant les tensions V1 et V2.

Un avantage du mode de réalisation de la figure 5 est que la charge des condensateurs s'effectue en début et fin d'alternance de l'alimentation alternative, ce qui évite les pics de courant.

Bien entendu, la présente invention est susceptible de diverses variantes et modifications qui apparaîtront à l'homme de l'art. En particulier, le dimensionnement des différents constituants et du circuit est à la portée de l'homme de métier en fonction de l'application visée. De plus, bien que l'invention ait été décrite en relation avec un montage de variateur de puissance, elle s'applique plus généralement à toute fourniture de deux tensions continues V1 et V2 à partir d'une tension alternative. Dans les circuits exposés à titre d'exemple, la tension alternative est alors appliquée entre les bornes 2 et 3.

## Revendications

1. Circuit destiné à fournir deux tensions continues de polarités inversées à partir d'une tension alternative, comprenant :
deux condensateurs (C1, C2) dont les électrodes respectives sont reliées à deux bornes destinées à recevoir ladite tension alternative (2, 3) et dont les deuxièmes électrodes respectives sont connectées l'une à l'autre par deux premières diodes (D1, D2) en anti-série ;
une source de courant commandable (M) dont une première borne est reliée aux anodes communes (A) de l'association en série desdites première diodes ;
deux deuxièmes diodes (D7, D8) connectées en anti-série entre lesdites bornes destinées à recevoir ladite tension alternative et dont les cathodes communes (10) sont reliées à une deuxième borne de ladite source de courant commandable ;
un circuit (9) de commande de ladite source de courant ; et
deux troisièmes diodes (D10, D9) connectées en anti-série entre lesdites bornes destinées à recevoir ladite tension alternative, ledit circuit de commande prélevant son alimentation entre les cathodes communes des deuxièmes diodes et les anodes communes (11) des troisièmes.

2. Circuit selon la revendication 1, dans lequel la source de courant est constituée d'un transistor MOS (M).

3. Circuit de commande en variation de puissance de deux interrupteurs (K1, K2) bidirectionnels en tension et unidirectionnels en courant montés en anti-parallèle, en série avec une charge alternative (Q), comprenant deux étages de commande identiques (4, 5) respectivement dédiés à chaque interrupteur, chaque étage de commande recevant une tension (V1, V2) de polarité inversée par rapport à l'autre, fournie par un circuit selon la revendication 1 ou 2.

4. Circuit selon la revendication 3, dans lequel lesdits interrupteurs sont des transistors IGBT.
